(19) Europäisches Patentamt
European Patent Office
Office européen des brevets

(11) **EP 3 451 239 A1**

(12) **EUROPEAN PATENT APPLICATION**
published in accordance with Art. 153(4) EPC

(43) Date of publication:
**06.03.2019 Bulletin 2019/10**

(51) Int Cl.:
***G06N 3/063*** (2006.01)

(21) Application number: **16899858.1**

(86) International application number:
**PCT/CN2016/080744**

(22) Date of filing: **29.04.2016**

(87) International publication number:
**WO 2017/185347 (02.11.2017 Gazette 2017/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Cambricon Technologies Corporation Limited**
**Beijing 100190 (CN)**

(72) Inventors:
• **GUO, Qi**
  **Beijing 100190 (CN)**
• **CHEN, Xunyu**
  **Beijing 100190 (CN)**
• **CHEN, Yunji**
  **Beijing 100190 (CN)**
• **CHEN, Tianshi**
  **Beijing 100190 (CN)**

(74) Representative: **AWA Sweden AB**
**P.O. Box 5117**
**200 71 Malmö (SE)**

(54) **APPARATUS AND METHOD FOR EXECUTING RECURRENT NEURAL NETWORK AND LSTM COMPUTATIONS**

(57) The present disclosure provides an apparatus for performing a recurrent neural network and an LSTM operation, comprising an instruction storage unit, a controller unit, an interconnection module, a main operation module, and a plurality of slave operation modules. The slave operation module is configured to multiply and add input data to obtain a partial sum and save the partial sum until neuron data is all inputted, and a result is returned to the main operation module. The main operation module is configured to perform interpolation activation on the sum returned from the slave operation module during a forward process, and perform interpolation to get an activation derivative during a reverse process and multiplied by a gradient. The present disclosure can solve the problem that the operational performance of the CPU and the GPU is insufficient, and the power consumption of previous decoding is large, and effectively improved the support for the forward operation of the multiple layer artificial neural network.

FIG. 1

EP 3 451 239 A1

**Description**

TECHNICAL FIELD

The present disclosure belongs to a field of artificial neural network technologies, relates to a recurrent neural network (RNN) and a long short-term memory (LSTM), and in particular to an apparatus and a method for performing the recurrent neural network and the LSTM.

BACKGROUND

The recurrent neural network and the LSTM are widely used in the fields of speech recognition, language modeling, translation, image description, and the like. In recent years, they have become more and more widely used in academia and industry due to their high recognition accuracy and good parallelism.

One known method of supporting the recurrent neural network and the LSTM is to use a general purpose processor. The method supports the above algorithm by executing general instructions using general purpose register files and general functional components. One of the disadvantages of the method is that the operational performance of the single general purpose processor is lower and cannot meet the performance requirements of the operations of the usual recurrent neural network and the usual LSTM. When multiple general purpose processors are executed in parallel, the communication between the general purpose processors becomes a performance bottleneck. In addition, the general purpose processor needs to decode the reverse operations of the recurrent neural network and the LSTM into a long list of operations and a fetch instruction sequence, and the previous decoding of the processor brings a larger power amount of power consumption.

Another known method of supporting the recurrent neural network and the LSTM is to use a graphics processing unit (GPU). The method supports the above algorithm by executing a general SIMD (Single Instruction Multiple Data) instruction using a general purpose register file and a general stream processor. Since the GPU is a device specially used for performing graphics image operations and scientific calculations, without special supports for multiple layer artificial neural network operations, a large amount of previous decoding work is still required to perform multiple layer artificial neural network operations, bringing a large amount of additional power consumption. In addition, the GPU has only a small on-chip buffer, and the model data (weight) of the recurrent neural network and the LSTM need to be repeatedly transferred from off-chip, and the off-chip bandwidth becomes the main performance bottleneck. In addition, the GPU has only a small on-chip buffer, and the model data (weight) of the recurrent neural network and the LSTM need to be repeatedly transferred from off-chip. The off-chip bandwidth becomes the main performance bottleneck, and brings huge power consumption.

SUMMARY

An aspect of the present disclosure provides an apparatus for performing a recurrent neural network and an LSTM, comprising an instruction storage unit, a controller unit, a data accessing unit, an interconnection module, a main operation module, and a plurality of slave operation modules. Therein, the storage unit is configured to buffer instructions. The controller unit is configured to read instructions from the instruction storage unit and decode the instructions into micro-instructions that control the interconnection module, the main operation module and the slave operation modules. The data accessing unit is configured to write data from a memory to corresponding data storage units of the main operation module and each slave operation module or reads data from the data storage units to the memory. The interconnection module is configured that the main operation module transmits input gradient vectors of present layer to all the slave operation modules through the interconnection module at a stage of starting a calculation process of reverse training of each layer of the neural network. And the interconnection module sequentially adds output gradient vector partial sums of the slave operation modules two together to obtain output gradient vectors of present layer after the calculation process of the slave operation modules is completed. The slave operation module is configured to multiply and add input data to obtain a partial sum and save it until neuron data is all inputted, a result is returned to the main operation module. The main operation module is configured to perform interpolation activation on the sum returned from the slave operation module in a forward process, and perform interpolation in a reverse process to obtain an activation derivative multiplied by a gradient.

The present disclosure also provides a method for performing the recurrent neural network and the LSTM operation using the above apparatus.

The apparatus can be applied to the following (comprising but not limited to) scenarios: a data processing devive, robots, computers, printers, scanners, phones, tablets, smart terminals, mobile phones, driving recorders, navigators, sensors, cameras, cloud servers cameras, camcorders, projectors, watches, earphones, mobile storage, wearable devices and other electronic products; aircraft, ships, vehicles and other vehicles; TV, air conditioning, microwave ovens, refrigerators, rice cookers, humidifiers, washing machines, electric lights, gas stoves, range hoods and other household appliances; and various types of medical equipment comprising nuclear magnetic resonance instruments, B-ultrasound, electrocardiographs, and the like.

BRIEF DESCRIPTION OF THE DRAWINGS

FIG. 1 illustrates an exemplary block diagram of an overall structure of an apparatus for performing a recurrent neural network and an LSTM according to one embodiment of the present disclosure;

FIG. 2 illustrates a structure of an interconnection module in the apparatus for performing the recurrent neural network and the LSTM according to one embodiment of the present disclosure;

FIG. 3 illustrates an exemplary block diagram showing a structure of a main operation module in the apparatus for performing the recurrent neural network and the LSTM according to one embodiment of the present disclosure;

FIG. 4 illustrates an exemplary block diagram showing a structure of a slave operation module in the apparatus for performing the recurrent neural network and the LSTM according to one embodiment of the present disclosure;

FIG. 5 illustrates an exemplary block diagram of a forward and reverse process of the recurrent neural network and the LSTM according to one embodiment of the present disclosure;

FIG. 6 illustrates a process of operation using the apparatus for performing the recurrent neural network and the LSTM of the present disclosure;

FIG. 7 illustrates a structure of the recurrent neural network;

FIG. 8 illustrates a structure of a block of the LSTM algorithm;

FIG. 9 illustrates a flowchart showing a single layer of the recurrent neural network and the LSTM of the present disclosure;

FIG. 10 illustrates a flowchart showing a back propagation of a gradient of a single layer operation of the recurrent neural network and the LSTM of the present disclosure.

EXAMPLES

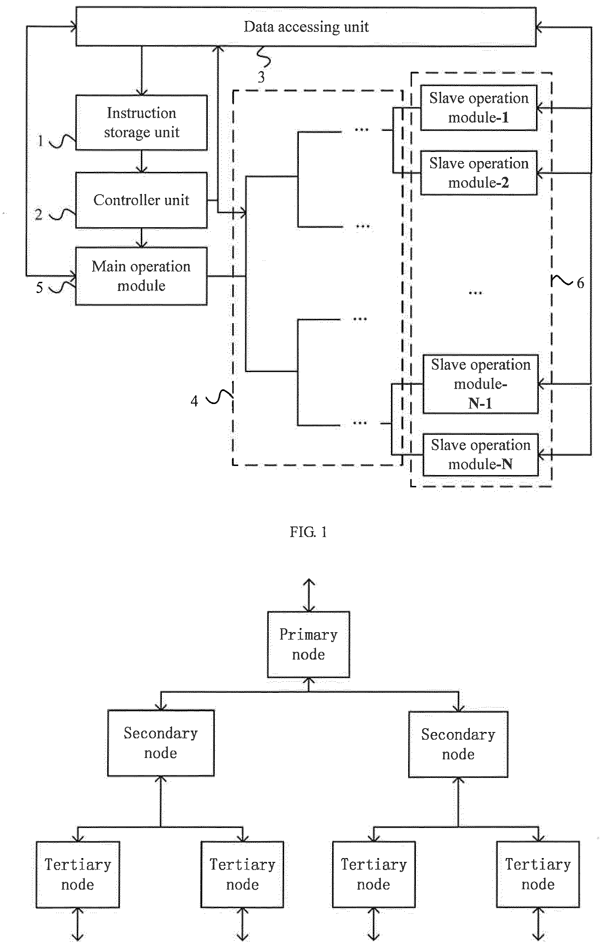

FIG. 1 illustrates an exemplary block diagram of an overall structure of an apparatus for performing a recurrent neural network and an LSTM according to one embodiment of the present disclosure. As shown in FIG. 1, the apparatus includes an instruction storage unit 1, a controller unit 2, a data accessing unit 3, an interconnection module 4, a main operation module 5, and a plurality of slave operation modules 6. The instruction storage unit 1, the controller unit 2, the data accessing unit 3, the interconnection module 4, the main operation module 5, and the slave operation modules 6 can be implemented through hardware circuits (including but not limited to a Field-Programmable Gate Array (FPGA), a CGRA, an application specific integrated circuit (ASIC), an analog circuit, and a memristor).
The instruction storage unit 1 reads instructions through the data accessing unit 3 and buffers the read instructions. The instruction storage unit 1 can be implemented through a variety of different memory devices (Static Random Access Memory, SRAM, Dynamic Random Access Memory, DRAM, enhanced Dynamic Random Access Memory, eDRAM, memristor, 3D-DRAM, nonvolatile memory, and the like)
The controller unit 2 reads the instructions from the instruction storage unit 1, decodes the instructions into micro-instructions that control actions of other units or modules, and sends the micro-instructions to the units or modules, such as the data accessing unit 3, the main operation module 5, the slave operation modules 6 and the like.
The data accessing unit 3 is configured to access an external address space, directly read and write data to each storage unit inside the apparatus, and complete to load and store the data.
The interconnection module is configured to distribute input vectors of the main operation module to the plurality of slave operation modules, and combine calculation results of the slave operation modules and return the combined calculation results to the main operation module.
FIG. 2 illustrates a schematic diagram showing a structure of the interconnection module according to one embodiment of the present disclosure. The interconnection module 4 constitutes a data path between the main operation module 5 and the plurality of slave operation modules 6. In this embodiment, the interconnection module 4 has an H-tree structure. The H-tree is a binary tree path composed of multiple nodes. Each node sends upstream data to two downstream nodes in the same way, and the data returned by the two downstream nodes is combined and returned to the upstream node.

Taking the calculation

$$out = \sum w \times in\_data$$

of the typical recurrent neural network and the LSTM as an example, the neuron data in the main operation module 5 is sent to each slave operation module 6 through the interconnection module 4. When the calculation processes of the slave operation modules 6 are completed, the values of the neuron data outputted by the slave operation modules are step by step combined into a complete vector consisted of the neuron data in the H-tree. The complete vector serves as an intermediate result vector. Assuming that there are N slave operation modules in the apparatus, the intermediate result vector is segmented by N, each segment has N elements, and the i-th slave operation module calculates the i-th element in each segment. The N elements are combined into a vector having a length of N through the interconnection module and returned to the main operation module. So if the network has only N output neurons, each slave operation unit only needs to output a value of a single neuron. If the network has m*N output neurons, each slave operation unit needs to output m neuron values.

In the present disclosure, the main operation module performs interpolation activation on a sum returned from the slave operation modules in a forward process, and performs interpolation to obtain an activation derivative multiplied by a gradient in a reverse process.

In the present disclosure, the slave operation module is configured to multiply and add input data to obtain a partial sum and save it until the neuron data is all inputted, a result is returned to the main operation module.

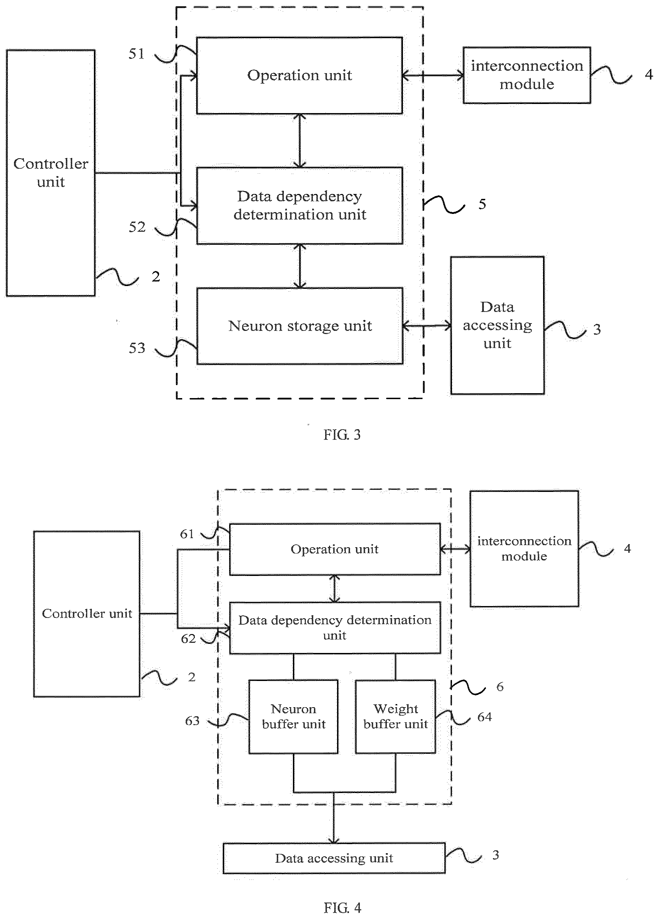

FIG. 3 illustrates an exemplary block diagram showing a structure of the main operation module in the apparatus for performing the operation of the recurrent neural network and the LSTM according to the present disclosure. As shown in FIG. 3, the main operation module 5 includes an operation unit 51, a data dependency determination unit 52, and a neuron storage unit 53.

The neuron storage unit 53 is configured to buffer input neuron data and output neuron data used by the main operation module 5 in a calculation process. The operation unit 51 performs various operation functions of the main operation module. The data dependency determination unit 52 is a port in which the operation unit 51 reads and writes the neuron storage unit 53, and can ensure that there is no consistency conflict with the reading and writing of data in the neuron storage unit 53 at the same time.

In detail, the data dependency determination unit 52 determines whether there is a dependency relationship between the data of the micro instruction that has not been executed and the data of the micro instruction that is being executed, and if not, the micro instruction that has not been executed is allowed to be immediately transmitted, otherwise, the micro instruction that has not been executed needs to wait and is then allowed to be transmitted until all the micro instructions that the micro instruction depends on are executed. For example, all micro instructions sent to the data dependency determination unit 52 are stored in an instruction queue inside the data dependency determination unit 52, in which, if a range of a read data of read instruction conflicts with a range of a write data of write instruction of front position of a queue, the read instruction must wait and is executed until the write instruction depends on it is executed. At the same time, the data dependency determination unit 52 is also responsible for reading an input gradient vector from the neuron storage unit 53 and transmitting the input gradient vector to the slave operation module 6 through the interconnection module 4, and the output data from the slave operation module 6 is directly sent to the operation unit 51 through the interconnection module 4. The instructions outputted by the controller unit 2 are sent to the operation unit 51 and the data dependency determination unit 52 to control its actions.

FIG. 4 illustrates an exemplary block diagram showing a structure of the slave operation module in the apparatus for performing the recurrent neural network and the LSTM according to the present disclosure. As shown in FIG. 4, each slave operation module 6 includes an operation unit 61, a data dependency determination unit 62, a neuron storage unit 63, a weight storage unit 64, and a weight gradient storage unit 65.

The operation unit 61 receives the micro instruction transmitted by the controller unit 2 and performs an arithmetic logic operation.

The data dependency determination unit 62 is responsible for reading and writing operations on the storage unit in the calculation process. The data dependency determination unit 62 ensures that there is no consistency conflict with the reading and writing of the storage unit. In detail, the data dependency determination unit 62 determines whether there is a dependency relationship between the data of the micro instruction that has not been executed and the data of the micro instruction that is being executed, and if not, the micro instruction that has not been executed is allowed to be immediately transmitted, otherwise, the micro instruction that has not been executed needs to wait and is then allowed to be transmitted until all the micro instructions that the micro instruction depends on are executed. For example, all micro instructions sent to the data dependency determination unit 62 are stored in an instruction queue inside the data dependency determination unit 62, in which, if a range of a read data of read instruction conflicts with a range of a write data of write instruction of front position of a queue, the read instruction must wait and is executed until the write instruction depends on it is executed.

The neuron storage unit 63 buffers scalar data corresponding to the slave operation module 6 in the input vector data and the partial sum of the output vector calculated by the slave operation module 6.

The weight buffer unit 64 buffers weight data required by the slave operation module 6 in the calculation process. For each slave operation module, only a column in a weight matrix corresponding to the scalar data stored by the slave operation module 6 is stored.

The weight gradient buffer unit 65 buffers weight gradient data required by the corresponding slave operation module in a process of updating the weight. The weight data stored in each slave operation module corresponds to its stored weight gradient data.

The slave operation module 6 can realize a parallel forward operation and a parallel weight update operation in a process of the recurrent neural network and the LSTM operations.

Taking the

$$out = \sum w \times in\_data$$

as an example, therein, the multiplication of the weight matrix w and the input gradient vector in_data can be divided into unrelated parallel calculating subtasks. The out and in data are column vectors. Each slave operation module only calculates a multiplication of corresponding partial scalar elements and corresponding column of weight matrix w in in_data. Each output vector obtained is a partial sum to be accumulated of a final result. These partial sum are added two together step by step in the H-tree to obtain the final result. So the calculating process is a process of parallel calculating partial sum and a process of subsequent accumulation. Each slave operation module 6 calculates the partial sum of the output vector. All the partial sums complete summation operations in the interconnection module 4 to obtain the final output vector. Each slave operation module 6 simultaneously multiplies the input vector and an output value of each layer in a forward operation, to calculate a weight, to update the weight stored by the slave operation module 6. The forward operation and a reverse training are two main processes of the neural network algorithm. To train (update) the weights in the network, first of all, a forward output of the input vector in a network composed of the current weights is calculated, this is the forward process. Then, the weight of each layer is trained (updated) layer by layer reversely according to the difference between the output value and the label value of the input vector itself. In the forward calculation process, the output vector of each layer and the derivative value of the activation function are saved, these data are required for the reverse training process, so these data are guaranteed to exist at the beginning of the reverse training. The output value of each layer in the forward operation is the data existing at the beginning of the reverse operation, and can be buffered in the main operation module by the data accessing unit and sent to the slave operation module through the H-tree. The main operation module 5 outputs the gradient vector to perform subsequent calculations, for example, the output gradient vector is multiplied by the derivative of the activation function in the forward operation to obtain the input gradient value of the next layer. The derivative of the activation function in the forward operation is the data existing at the beginning of the reverse operation, and can be buffered in the main operation module by the data accessing unit.

In accordance with one embodiment of the present disclosure, an instruction set for performing the forward operation of the artificial neural network on the aforementioned apparatus is also provided. The instruction set includes CONFIG instruction(s), COMPUTE instruction(s), IO instruction(s), NOP instruction(s), JUMP instruction(s), and MOVE instruction(s), therein:

The CONFIG instruction configures various constants required for the calculation of the current layer before the calculation of each layer of artificial neural network begins;

The COMPUTE instruction completes the arithmetic logic calculation of each layer of artificial neural network;

The IO instruction realizes reading input data required for the calculation from the external address space and storing the data back to the external space after the calculation is completed;

The NOP instruction is responsible for clearing the micro instructions currently loaded into all internal micro instruction buffer queues, ensuring that all instructions before the NOP instruction are cleared. The NOP instruction itself does not contain any operations;

The JUMP instruction is responsible for a jump of a next instruction address that the controller will read from the instruction storage unit, and is used to implement the jump of a control flow;

The MOVE instruction is responsible for carrying data of an address in the internal address space of the apparatus to another address in the internal address space of the apparatus. The process is independent from the operation unit and does not occupy resources of the operation unit during execution.

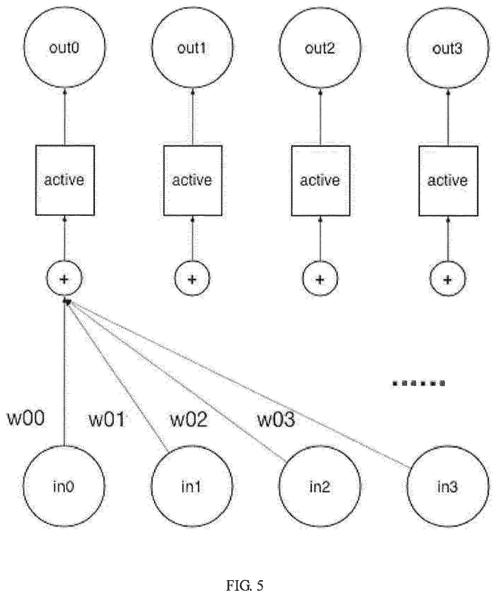

FIG. 5 illustrates an exemplary block diagram of a forward and reverse process of the recurrent neural network and the LSTM according to one embodiment of the present disclosure. In different slave operation modules 6, the input neuron vector is subjected to a dot product operation with the weight vector of the slave operation module 6 respectively, to obtain a corresponding output neuron value. All the output neuron values constitute the intermediate result vector. The intermediate result vector is subjected to add an offset vector and an activation operation to obtain the final output neuron vector of the layer neural network, and the formula is described as

$$out = \sum w \times in\_data$$

The weight vector of each slave operation module 6 is a column vector in the weight matrix corresponding to the slave operation module 6. The interconnection module sends the input neuron vector $[in0,...,inN]$ to all the slave operation units, temporarily stored in the neuron storage units. For the i-th slave operation unit, the dot product of its corresponding weight vector $[w\_i0, ..., w\_iN]$ and the input neuron vector is calculated. The results outputted by the slave operation units are combined into the complete output vector through the interconnection module and the complete output vector is returned to the main operation unit, and the activation operation is performed in the main operation unit to obtain the final output neuron vector $[out0, out1, out2, ..., outN]$.

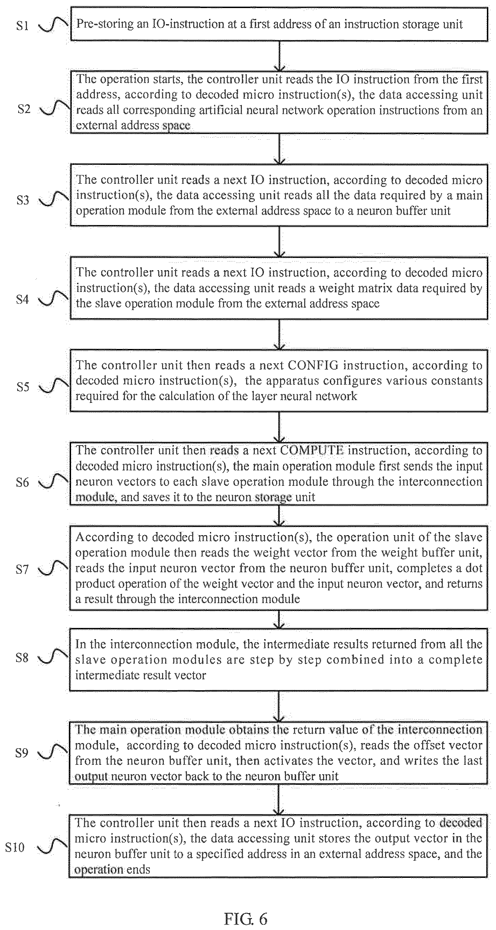

FIG. 6 illustrates a process of operation using the apparatus for performing the recurrent neural network and the LSTM of the present disclosure.

In step S1, an IO instruction is pre-stored at a first address of the instruction storage unit 1.

In step S2, the operation starts, the controller unit 2 reads the IO instruction from the first address of the instruction storage unit 1, according to decoded micro instruction(s), the data accessing unit 3 reads all corresponding artificial neural network operation instructions from an external address space, and buffers them in the instruction storage unit 1.

In step S3, the controller unit 2 then reads a next IO instruction from the instruction storage unit. According to decoded micro instruction(s), the data accessing unit 3 reads all data (for example, including an input neuron vector, an interpolation table, a constant table, an offset, and the like) required by the main operation module 5 from the external address space to the neuron storage unit 53 of the main operation module 5.

In step S4, the controller unit 2 then reads a next IO instruction from the instruction storage unit. According to decoded micro instruction(s), the data accessing unit 3 reads a weight matrix data required by the slave operation module 6 from the external address space.

In step S5, the controller unit 2 then reads a next CONFIG instruction from the instruction storage unit. According to decoded micro instruction(s), the apparatus configures various constants required for the calculation of the layer neural network. For example, the operation units 51, 61 configure values of internal registers of units according to the parameters in the micro instructions. The parameters include, for example, an accuracy setting of the present layer calculation, the data of the activation function (for example, the precision bit of the present layer calculation).

In step S6, the controller unit 2 then reads a next COMPUTE instruction from the instruction storage unit. According to decoded micro instruction(s), the main operation module 5 first sends the input neuron vector to each slave operation module 6 through the interconnection module 4, and saves it to the neuron storage unit 63 of the slave operation module 6.

In step S7, according to micro instruction(s) decoded by the COMPUTE instruction, the operation unit 61 of the slave operation module 6 reads the weight vector (the column vector corresponding to the slave operation module 6 in the weight matrix) from the weight storage unit 64, reads the input neuron vector from the neuron storage unit, completes a dot product operation of the weight vector and the input neuron vector to get an intermediate result, and returns the intermediate result through the interconnection module.

In step S8, in the interconnection module 4, the intermediate results returned from all the slave operation modules 6 are step by step combined into a complete intermediate result vector.

In step S9, the main operation module 5 obtains the return value of the interconnection module 4, according to micro instruction(s) decoded by the COMPUTE instruction, reads the offset vector from the neuron storage unit 53, adds the offset vector to the vector returned by the interconnection module 4, and then activates the added result and writes back the last output neuron vector to the neuron storage unit 53.

In step S10, the controller unit then reads a next IO instruction from the instruction storage unit. According to decoded micro instruction(s), the data accessing unit 3 stores the output neuron vector in the neuron storage unit 53 to a specified address in the external address space, and the operation ends.

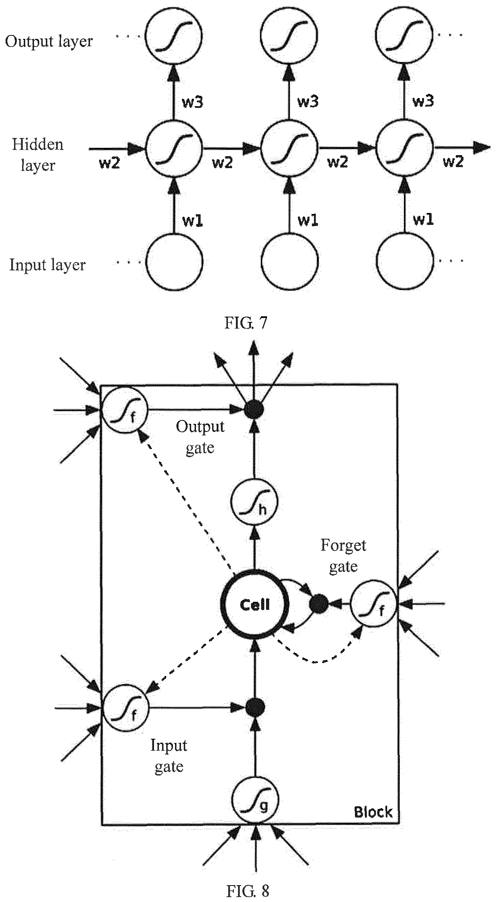

FIG. 7 illustrates a structure of the recurrent neural network. In order to solve the dependence of the traditional neural network on the previous input, in the forward operation, an input of the recurrent neural network comes from an input of the current moment and an output of a hidden layer of the previous moment. In the formula, I is the number of inputs, H is the number of hidden layers, and K is the number of outputs. Therein, $\alpha_h^t$ is the intermediate value of the h-th output at time t, $b_h^t$ is the h-th output at time t after activation, $\delta_h^t$ indicates the partial derivative of the residual to $\alpha_h^t$, $\theta$ indicates the activation function.

The formula for forward propagation is expressed as:

$$\alpha_h^t = \sum_{i=1}^{I} w_{ih} x_i^t + \sum_{h'=1}^{H} w_{ih} b_{h'}^{t-1}$$

$$b_h^t = \theta(\alpha_h^t)$$

The formula for back propagation is expressed as:

$$\delta_h^t = \theta'(\alpha_h^t)\left(\sum_{k=1}^{K} \delta_k^t w_{hk} + \sum_{h'=1}^{H} \delta_{h'}^{t+1} w_{hh'}\right)$$

Therein, the effect of the integrated time series is achieved by the connection of the hidden layer at the previous moment and the output of the present layer. However, such a recurrent neural network has a problem of time decay.

FIG. 8 illustrates a structure of a block of an LSTM algorithm. Compared to the traditional recurrent neural network, the LSTM introduces a cell to record information at the current moment point. It can be seen that in the LSTM algorithm, a block consists of three gates and one cell, input gate, output gate, and forget gate. The main idea of the LSTM algorithm is to use the cell to record the state of the current moment, and to transmit the cell value to the previous moment to achieve the function of directly transmitting information at different times. The input gate and the forget gate are used to control the weight of the current moment input and the last time cell in the cell's output. The output gate is used to control the output of the cell. Under the control of the input gate and the forget gate, the appropriate information will be stored for a long time and always recorded in the cell, thus solving the problem that the recurrent neural network decays with time.

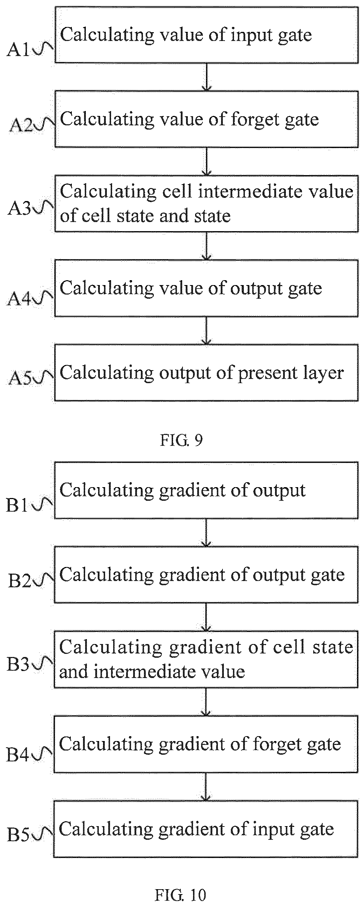

FIG. 9 illustrates a flowchart showing a single layer of the recurrent neural network and the LSTM of the present disclosure.

In step A1, a product sum of a current moment input and a weight value corresponding to the input gate is calculated and buffered in a neuron buffer area, and then a product sum of a cell state at the previous moment and the corresponding weight, and a product sum of of the hidden layer at the previous moment and the corresponding weight are all calculated, and buffered them in the buffer area, and finally the three of them are added to activate and get a value of input gate.

In step A2, a product sum of a current moment input and a weight value corresponding to the forget gate is calculated and buffered in the neuron buffer area, and then a product sum of the cell state at the previous moment and the corresponding weight, and a product sum of of the hidden layer at the previous moment and the corresponding weight are all calculated, and buffered them in the buffer area, and finally the three of them are added to activate and get a value of forget gate.

In step A3, a product sum of a current moment input and a weight value corresponding to the input gate is calculated and buffered in the neuron buffer area, and a product sum of of the hidden layer at the previous moment and the corresponding weight is calculated, finally, them two are added activated to get the intermediate value of the cell state, and the intermediate value of the cell state is buffered to the neuron buffer area. Then, the intermediate value is multiplied by the input gate, buffered in the buffer area of the operation unit (51 in FIG. 7). The cell state at the previous moment multiplied by the corresponding forget gate is added to the last buffer in the operation unit correspondingly to get the value of the cell state.

In step A4, a product sum of a current moment input and a weight value corresponding to the output gate is calculated and buffered in the neuron buffer area, and then a product sum of a cell state at the previous moment and the corresponding weight, and a product sum of of the hidden layer at the previous moment and the corresponding weight are all calculated, and buffered them in the buffer area, and finally the three of them are added to activate and get a value of output gate.

In step A5, the cell state and the output gate are multiplied correspondingly to obtain the output of the present layer.

FIG. 10 illustrates a flowchart showing a back propagation of a gradient of a single layer operation of the recurrent neural network and the LSTM of the present disclosure.

In step B1, the gradient of the hidden layer at the next moment and the weight of the corresponding position are multiplied and added, and further added a product of a residual of the present layer and the corresponding weight, to obtain an output gradient of the present layer.

In step B2, the output gradient and the activation value of the cell are multiplied and added, and are buffered in the neuron buffer area, and are multiplied by the derivative of the activation function to obtain an output gate gradient.

In step B3, the state gradient of the cell is obtained by the current output gradient multiplied the current value of the output gate and the derivative of state activation, and is stored in the neuron. Then, the gradient of the cell at the previous moment, the gradient of the input gate and the forget gate, and the output gate gradient at the current moment are multiplied by the corresponding weights respectively and then buffered in the neuron, and they add finally to get a cell state gradient. The gradient of the intermediate value of the cell is obtained by the activation value of input gate at current moment multiplying the derivative of the activation function of the cell, and the state gradient of the cell.

In step B4, the state gradients of all the cells at the current moment are multiplied respectively by the corresponding cell state outputs at the previous moment and they are added together, and finally multiplied by the derivative of the forget gate to obtain a gradient of the forget gate.

In step B5, the state gradients of all the cells at the current moment are multiplied respectively by the activation value of the intermediate value of the current moment, and they are added together, and finally multiplied by the derivative of the input gate to obtain the gradient of the input gate.

It is worth mentioning that the traditional recurrent neural network algorithm applied to this apparatus is greatly simplified the LSTM algorithm. When calculating the output, it only depends on the input of the current moment and the output of the previous moment, and the forward and reverse expressions are similar to the running sub-process of the LSTM, which will not repeat here.

For the complete recurrent neural network and the LSTM algorithm, the implementation process is similar to the above typical calculation. The corresponding weights and data are taken according to the formula to perform weighting and summation. For a long time, the operation instructions of the next layer regards the output neuron address of the upper layer stored in the main operation unit as the input neuron address of the present layer. Similarly, the weight address and offset address in the instruction are also changed to the address corresponding to the present layer.

By adopting the apparatus and the instruction set for performing the recurrent neural network and the LSTM, the problems that the CPU and the GPU have insufficient performance and the large amount of power consumption for the previous decoding overhead are solved. It effectively improves the support for the forward operation of multiple layer artificial neural network.

Through the use of dedicated on-chip buffer for the recurrent neural network and the LSTM, the reuse of input neurons and weight data are fully exploited, which avoids repeatedly reading the data from memory, reducing the memory access bandwidth and avoiding the memory bandwidth becoming performance bottlenecks of the forward operation of the multiple layers of the artificial neural network.

**Claims**

**1.** An apparatus for performing a recurrent neural network and an LSTM operation, comprising an instruction storage unit, a controller unit, an interconnection module, a main operation module, and a plurality of slave operation modules, wherein,
the instruction storage unit reads instruction(s) through a data accessing unit and buffers the read instruction(s);

the controller unit reads instruction(s) from the instruction storage unit, decodes the instruction(s) into micro instructions that control actions of other units or modules, and then distributes the micro instructions to the units or modules respectively;

the data accessing unit is configured to access an external address space to complete loading and storing of data;

the interconnecting module is configured to distribute input vectors of the main operation module to the plurality of slave operation modules, and combine calculation results of the slave operation modules, and return it to the main operation module;

the slave operation module is configured to multiply and add input data to obtain a partial sum and save the partial sum until neuron data is all inputted, and a result is returned to the main operation module;

the main operation module is configured to perform interpolation activation on the sum returned from the slave operation module during a forward process, and perform interpolation in a reverse process to obtain an activation derivative multiplied by a gradient.

2. The apparatus for performing the recurrent neural network and the LSTM operation according to claim 1, wherein the main operation module comprises an operation unit, a data dependency determination unit, and a neuron buffer unit, wherein,

the operation unit is configured to receive micro instruction(s) transmitted by the controller unit and perform an arithmetic logic operation;

the data dependency determination unit is configured to perform read and write operations on the neuron buffer unit to ensure that there is no read or write consistency conflict between data used in the instructions;

the neuron buffer unit is configured to buffer input neuron data and output neuron data.

3. The apparatus for performing the recurrent neural network and the LSTM operation according to claim 1, wherein the slave operation module comprises an operation unit, a data dependency determination unit, a neuron storage unit, a weight storage unit, and a weight gradient storage unit, wherein,

the operation unit is configured to receive micro instruction(s) transmitted by the controller unit and perform an arithmetic logic operation;

the data dependency determination unit is configured to perform read and write operations on the neuron buffer unit to ensure that there is no read or write consistency conflict between data used in the instructions;

the neuron buffer unit is configured to buffer input neuron data and output neuron data.

the weight buffer unit is configured to buffer weight data required by the slave operation module in a calculation process;

the weight gradient buffer unit is configured to buffer weight gradient data required by the corresponding slave operation modules in a process of updating weights.

4. The apparatus for performing the recurrent neural network and the LSTM operation according to claim 1, wherein a following calculation process is performed in the forward process of the recurrent neural network and the LSTM operation:

meaning of parameters expressed in following formulas:

$w_{ij}$ represents a connection weight from unit i to unit j, $a_j^t$ represents a value of an input gate at time j, $b'_j$ represents an activation value of a unit input gate at time j, subscripts, $l$, $\varnothing$, $\omega$, c, represents an input gate, an output gate, a forget gate, and a c-th cell respectively, $w_{cl}$, $w_{c\varnothing}$, $w_{c\omega}$ represents connection weight of the input gate, the output gate, the forget gate of the c-th cell to a previous moment, $s_c^t$ represents a state of the c-th cell at time t, f, g, h are activation functions, and I represents an input size, K represents an output size, H represents a hidden layer size, h refers to a connection of the cell and the hidden layer at other moments, and G represents all inputs to the hidden layer;

$$\delta_j^t = \frac{\partial L}{\partial a_j^t}$$

to simplify expression, define , that is, partial derivative of a residual for a j-th cell at time t, the following formulas are all completed at a block of a moment, and other moment and so on;

following is an expression of a forward operation, an order of calculation is in an order given:

input gate:

$$a_i^t = \sum_{i=1}^{I} w_{i\,l} x_i^t + \sum_{h=1}^{H} w_{hl} b_h^t + \sum_{c=1}^{C} w_{c\,l} s_c^t$$

$$b_l^t = f(a_l^t)$$

forget gate:

$$a_\emptyset^t = \sum_{i=1}^{I} w_{i\emptyset} x_i^t + \sum_{h=1}^{H} w_{h\emptyset} b_h^{t-1} + \sum_{c=1}^{C} w_{c\emptyset} s_c^{t-1}$$

$$b_\emptyset^t = f(a_\emptyset^t)$$

cell:

$$a_c^t = \sum_{i=1}^{I} w_{i\,c} x_i^t + \sum_{h=1}^{H} w_{hc} b_h^{t-1}$$

cell state:

$$s_c^t = b_\emptyset^t s_c^{t-1} + b_l^t g(a_c^t)$$

output gate:

$$a_\omega^t = \sum_{i=1}^{I} w_{i\omega} x_i^t + \sum_{h=1}^{H} w_{h\omega} b_h^{t-1} + \sum_{c=1}^{C} w_{c\omega} s_c^t$$

$$b_\omega^t = f(a_\omega^t)$$

<u>output of cell:</u>

$$b_c^t = b_\omega^t h(s_c^t)$$

.

5. The apparatus for performing the recurrent neural network and the LSTM operation according to claim 4, wherein a following calculation process is performed when a gradient of a single layer operation of the cyclic neural network and the LSTM operation is reversed:
an expression of an inverse operation formula is calculated in an order in which a formula is given:

definition:

$$\epsilon_c^t = \frac{\partial L}{\partial b_c^t}$$

$$\epsilon_s^t = \frac{\partial L}{\partial s_c^t}$$

output of cell:

$$\epsilon_c^t = \sum_{k=1}^{K} w_{ck} \delta_k^t + \sum_{g=1}^{G} w_{cg} \delta_g^{t+1}$$

output gate:

$$\delta_\omega^t = f'(a_\omega^t) \sum_{c=1}^{C} h(s_c^t) \, \epsilon_c^t$$

cell state:

$$\epsilon_s^t = b_\omega^t h'(s_c^t)\epsilon_c^t + b_\emptyset^{t+1}\epsilon_s^{t+1} + w_{cl}\delta_l^{t+1} + w_{c\emptyset}\delta_\emptyset^{t+1} + w_{c\omega}\delta_\omega^{t+1}$$

cell:

$$\delta_c^t = b_l^t g'(a_c^t)\epsilon_s^t$$

forget gate:

$$\delta_\emptyset^t = f'\left(a_\emptyset^t\right) \sum_{c=1}^{C} s_c^{t-1} \, \epsilon_s^t$$

input gate:

$$\delta_l^t = f'\left(a_l^t\right) \sum_{c=1}^{C} g(s_c^t) \, \epsilon_s^t$$

**6.** A method for performing a recurrent neural network and an LSTM operation, comprising:

multiplying and adding input data by using a plurality of slave operation modules to obtain a partial sum and saving the partial sum until neuron data is all inputted, and returning a result to a main operation module; performing interpolation activation on the sum returned from the slave operation module during a forward process using the main operation module, and interpolating to get an activation derivative during a reverse process and multiplied by a gradient.

7. The method for performing the recurrent neural network and the LSTM operation according to claim 6, wherein a following calculation process is performed in the forward process of the recurrent neural network and the LSTM operation:

meaning of parameters expressed in following formulas:

$w_{ij}$ represents a connection weight from unit i to unit j, $a_j^t$ represents a value of an input gate at time j, $b'_j$ represents an activation value of a unit input gate at time j, subscripts, $l$, $\emptyset$, $\omega$, c, represents an input gate, an output gate, a forget gate, and a c-th cell respectively, $w_{cl}$, $w_{c\emptyset}$, $w_{c\omega}$ represents connection weight of the input gate, the output gate, the forget gate of the c-th cell to a previous moment, $s_c^t$ represents a state of the c-th cell at time t, f, g, h are activation functions, and I represents an input size, K represents an output size, H represents a hidden layer size, h refers to a connection of the cell and the hidden layer at other moments, and G represents all inputs to the hidden layer;

$$\delta_j^t = \frac{\partial L}{\partial a_j^t}$$

to simplify expression, define , that is, partial derivative of a residual for a j-th cell at time t, the following formulas are all completed at a block of a moment, and other moment and so on;

following is an expression of a forward operation, an order of calculation is in an order given:

input gate:

$$a_l^t = \sum_{i=1}^{I} w_{il} x_i^t + \sum_{h=1}^{H} w_{hl} b_h^t + \sum_{c=1}^{C} w_{cl} s_c^t$$

$$b_l^t = f(a_l^t)$$

forget gate:

$$a_\emptyset^t = \sum_{i=1}^{I} w_{i\emptyset} x_i^t + \sum_{h=1}^{H} w_{h\emptyset} b_h^{t-1} + \sum_{c=1}^{C} w_{c\emptyset} s_c^{t-1}$$

$$b_\emptyset^t = f(a_\emptyset^t)$$

cell:

$$a_c^t = \sum_{i=1}^{I} w_{ic} x_i^t + \sum_{h=1}^{H} w_{hc} b_h^{t-1}$$

Cell state:

$$s_c^t = b_\emptyset^t s_c^{t-1} + b_l^t g(a_c^t)$$

output gate:

$$a_\omega^t = \sum_{i=1}^{I} w_{i\omega} x_i^t + \sum_{h=1}^{H} w_{h\omega} b_h^{t-1} + \sum_{c=1}^{C} w_{c\omega} s_c^t$$

$$b_\omega^t = f(a_\omega^t)$$

output of cell:

$$b_c^t = b_\omega^t h(s_c^t)$$

.

8. The method for performing the recurrent neural network and the LSTM operation according to claim 1, wherein a following calculation process is performed when a gradient of a single layer operation of the cyclic neural network and the LSTM operation is reversed:

an expression of an inverse operation formula is calculated in an order in which a formula is given:

definition:

$$\epsilon_c^t = \frac{\partial L}{\partial b_c^t}$$

$$\epsilon_s^t = \frac{\partial L}{\partial s_c^t}$$

output of cell:

$$\epsilon_c^t = \sum_{k=1}^{K} w_{ck} \delta_k^t + \sum_{g=1}^{G} w_{cg} \delta_g^{t+1}$$

output gate:

$$\delta_\omega^t = f'(a_\omega^t) \sum_{c=1}^{C} h(s_c^t) \epsilon_c^t$$

state of cell:

$$\epsilon_s^t = b_\omega^t h'(s_c^t) \epsilon_c^t + b_\emptyset^{t+1} \epsilon_s^{t+1} + w_c \delta_l^{t+1} + w_{c\emptyset} \delta_\emptyset^{t+1} + w_{c\omega} \delta_\omega^{t+1}$$

cell:

$$\delta_c^t = b_l^t g'(a_c^t) \epsilon_s^t$$

forget gate:

$$\delta_\phi^t = f'\left(a_\phi^t\right) \sum_{c=1}^{C} s_c^{t-1} \, \epsilon_s^t$$

input gate:

$$\delta_\iota^t = f'\left(a_\iota^t\right) \sum_{c=1}^{C} g(s_c^t) \, \epsilon_s^t$$

Data accessing unit

3

Instruction
storage unit

1

Controller unit

2

Main operation
module

5

Slave operation
module-1

Slave operation
module-2

...

6

Slave operation
module-
N-1

4

Slave operation
module-N

...

FIG. 1

Primary
node

Secondary
node

Secondary
node

Tertiary
node

Tertiary
node

Tertiary
node

Tertiary
node

FIG. 3

FIG. 4

FIG. 5

S1    Pre-storing an IO-instruction at a first address of an instruction storage unit

S2    The operation starts, the controller unit reads the IO instruction from the first address, according to decoded micro instruction(s), the data accessing unit reads all corresponding artificial neural network operation instructions from an external address space

S3    The controller unit reads a next IO instruction, according to decoded micro instruction(s), the data accessing unit reads all the data required by a main operation module from the external address space to a neuron buffer unit

S4    The controller unit reads a next IO instruction, according to decoded micro instruction(s), the data accessing unit reads a weight matrix data required by the slave operation module from the external address space

S5    The controller unit then reads a next CONFIG instruction, according to decoded micro instruction(s), the apparatus configures various constants required for the calculation of the layer neural network

S6    The controller unit then reads a next COMPUTE instruction, according to decoded micro instruction(s), the main operation module first sends the input neuron vectors to each slave operation module through the interconnection module, and saves it to the neuron storage unit

S7    According to decoded micro instruction(s), the operation unit of the slave operation module then reads the weight vector from the weight buffer unit, reads the input neuron vector from the neuron buffer unit, completes a dot product operation of the weight vector and the input neuron vector, and returns a result through the interconnection module

S8    In the interconnection module, the intermediate results returned from all the slave operation modules are step by step combined into a complete intermediate result vector

S9    The main operation module obtains the return value of the interconnection module, according to decoded micro instruction(s), reads the offset vector from the neuron buffer unit, then activates the vector, and writes the last output neuron vector back to the neuron buffer unit

S10    The controller unit then reads a next IO instruction, according to decoded micro instruction(s), the data accessing unit stores the output vector in the neuron buffer unit to a specified address in an external address space, and the operation ends

FIG. 6

Output layer

Hidden layer

Input layer

w3 w3 w3

w2 w2 w2 w2 w2

w1 w1 w1

FIG. 7

Output gate

Forget gate

Cell

Input gate

Block

FIG. 8

A1 ⌇ Calculating value of input gate

↓

A2 ⌇ Calculating value of forget gate

↓

A3 ⌇ Calculating cell intermediate value of cell state and state

↓

A4 ⌇ Calculating value of output gate

↓

A5 ⌇ Calculating output of present layer

FIG. 9

B1 ⌇ Calculating gradient of output

↓

B2 ⌇ Calculating gradient of output gate

↓

B3 ⌇ Calculating gradient of cell state and intermediate value

↓

B4 ⌇ Calculating gradient of forget gate

↓

B5 ⌇ Calculating gradient of input gate

FIG. 10

# INTERNATIONAL SEARCH REPORT

| International application No. |
|---|
| **PCT/CN2016/080744** |

## A. CLASSIFICATION OF SUBJECT MATTER

G06N 3/063 (2006.01) i

According to International Patent Classification (IPC) or to both national classification and IPC

## B. FIELDS SEARCHED

Minimum documentation searched (classification system followed by classification symbols)

G06N, G10L

Documentation searched other than minimum documentation to the extent that such documents are included in the fields searched

Electronic data base consulted during the international search (name of data base and, where practicable, search terms used)

CNABS, CNTXT, DWPI, CNKI, BAIDU SCHOLAR, GOOGLE SCHOLAR: GUO, Qi; CHEN, Yunji; CAMBRICON; LOONGSON TECHNOLOGY; INSTITUTE OF COMPUTING TECHNOLOGY; multiple, service, calculate, handle, cooperation, main, slave, Recurrent Neural Network, long short term memory, RNN, LSTM

## C. DOCUMENTS CONSIDERED TO BE RELEVANT

| Category* | Citation of document, with indication, where appropriate, of the relevant passages | Relevant to claim No. |
|---|---|---|
| X | CN 102947818 A (THE REGENTS OF THE UNIVERSITY OF CALIFORNIA), 27 February 2013 (27.02.2013), description, paragraphs [0036]-[0048] and [0056]-[0071], and figures 2 and 5-6 | 1, 4-8 |
| A | CN 102947818 A (THE REGENTS OF THE UNIVERSITY OF CALIFORNIA), 27 February 2013 (27.02.2013), description, paragraphs [0036]-[0048] and [0056]-[0071], and figures 2 and 5-6 | 2-3 |
| A | JP 07311754 A (RICOH KK.), 28 November 1995 (28.11.1995), the whole document | 1-8 |
| A | CN 105488565 A (INSTITUTE OF COMPUTING TECHNOLOGY, CHINESE ACADEMY OF SCIENCES), 13 April 2016 (13.04.2016), the whole document | 1-8 |
| A | CN 103970512 A (LOONGSON TECHNOLOGY CORPORATION LIMITED), 06 August 2014 (06.08.2014), the whole document | 1-8 |
| A | CN 104145281 A (AN, Bingyi), 12 November 2014 (12.11.2014), the whole document | 1-8 |
| A | CN 105512723 A (NANJING AIXI INFORMATION TECHNOLOGY CO., LTD.), 20 April 2016 (20.04.2016), the whole document | 1-8 |

☒ Further documents are listed in the continuation of Box C.          ☒ See patent family annex.

| | |
|---|---|
| *     Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| 22 January 2017 (22.01.2017) | **06 February 2017 (06.02.2017)** |

| Name and mailing address of the ISA/CN: | Authorized officer |
|---|---|
| State Intellectual Property Office of the P. R. China No. 6, Xitucheng Road, Jimenqiao Haidian District, Beijing 100088, China Facsimile No.: (86-10) 62019451 | **YOU, Xiaomei** Telephone No.: (86-10) **62089539** |

Form PCT/ISA/210 (second sheet) (July 2009)

## INTERNATIONAL SEARCH REPORT

| International application No. |
|---|
| **PCT/CN2016/080744** |

**C (Continuation).** DOCUMENTS CONSIDERED TO BE RELEVANT

| Category* | Citation of document, with indication, where appropriate, of the relevant passages | Relevant to claim No. |
|---|---|---|
| A | CN 104538028 A (TSINGHUA UNIVERSITY), 22 April 2015 (22.04.2015), the whole document | 1-8 |
| A | CHEN, Yunji et al. "Artificial Neural Network Processor." SCIENCE CHINA: CHINESE BULLETIN OF LIFE SCIENCE, vol. 46, no. 2, 27 February 2016 (27.02.2016), ISSN: 1674-7232, pages 223-224. | 1-8 |

Form PCT/ISA/210 (continuation of second sheet) (July 2009)

# INTERNATIONAL SEARCH REPORT
## Information on patent family members

International application No.

**PCT/CN2016/080744**

| Patent Documents referred in the Report | Publication Date | Patent Family | Publication Date |
|---|---|---|---|
| CN 102947818 A | 27 February 2013 | US 8655815 B2 | 18 February 2014 |
| | | EP 2572293 A1 | 27 March 2013 |
| | | JP 2013529342 A | 18 July 2013 |
| | | WO 2011146147 A1 | 24 November 2011 |
| | | US 2011289034 A1 | 24 November 2011 |
| | | CN 102947818 B | 22 July 2015 |
| | | KR 20130111956 A | 11 October 2013 |
| | | CA 2799167 A1 | 24 November 2011 |
| | | EP 2572293 A4 | 04 December 2013 |
| | | US 2014172763 A1 | 19 June 2014 |
| | | HK 1180077 A0 | 11 October 2013 |
| | | IN 201210441 P4 | 23 May 2014 |
| JP 07311754 A | 28 November 1995 | None | |
| CN 105488565 A | 13 April 2016 | None | |
| CN 103970512 A | 06 August 2014 | CN 103970512 B | 14 September 2016 |
| CN 104145281 A | 12 November 2014 | US 2014344203 A1 | 20 November 2014 |
| | | WO 2013115431 A1 | 08 August 2013 |
| | | KR 20130090147 A | 13 August 2013 |
| CN 105512723 A | 20 April 2016 | None | |
| CN 104538028 A | 22 April 2015 | WO 2016101688 A1 | 30 June 2016 |

Form PCT/ISA/210 (patent family annex) (July 2009)